## Europäisches Patentamt

## European Patent Office

## Office européen des brevets

(11) Veröffentlichungsnummer: **0 005 489**
**B1**

(12) # EUROPÄISCHE PATENTSCHRIFT

(45) Veröffentlichungstag der Patentschrift:
12.01.83

(51) Int. Cl.³: **H 04 L 11/00**

(21) Anmeldenummer: 79101373.3

(22) Anmeldetag: 04.05.79

(54) Verfahren und Schaltungsanordnung zur Datenübertragung zwischen einer Zentralstation und einem von mehreren Datenteilnehmern in einem envelopestrukturierten, synchronen Datennetz.

(30) Priorität: 17.05.78 DE 2821518

(43) Veröffentlichungstag der Anmeldung:
28.11.79 Patentblatt 79/24

(45) Bekanntmachung des Hinweises auf die Patenterteilung:
12.01.83 Patentblatt 83/2

(84) Benannte Vertragsstaaten:
BE CH IT NL SE

(56) Entgegenhaltungen:
DE-A-2 205 260
US-A-4 048 441

EUROCON '77 EUROPEAN CONFERENCE ON ELEC-
TROTECHNICS. CONFERENCE PROCEEDINGS ON
COMMUNICATIONS, 3–7 Mai 1977 VENEZIA (IT)
BONAVENTURA et al.: «Experimental point-to-
point connections for synchronous digital data
transmission», Seiten 580 bis 586

SIEMENS REVIEW, volume 43, 1976, No. 4 ERLAN-
GEN (DE) LUKAS et al.: «Transdata 8170 and 8171
Cluster controllers for Cluster connection in the
TRANSDATA 810 terminal system», Seiten 148 bis
152

(73) Patentinhaber: SIEMENS AKTIENGESELLSCHAFT
Berlin und München, Postfach 22 02 61,
D-8000 München 22 (DE)

(72) Erfinder: Nöller, Horst, Am Roten Berg 4, D-6109 Mühltal
- Traisa (DE)
Erfinder: Fischer, Günter, Fischlstrasse 4,
D-8000 München 50 (DE)
Erfinder: Merz, Gerhard, Gräfelfinger Strasse 14,
D-8000 München 70 (DE)
Erfinder: Buding, Holger, Dipl.-Ing., Vorderes
Gleissental, D-8024 Deisenhofen (DE)
Erfinder: Lukinac, Miroslav, Dipl.-Ing., Wiesentfelser
Strasse 70, D-8000 München 60 (DE)

ACTORUM AG

**Verfahren und Schaltungsanordnung zur Datenübertragung zwischen einer Zentralstation
und einem von mehreren Datenteilnehmern in einem envelopestrukturierten, synchronen Datennetz**

Die Erfindung bezieht sich auf ein Verfahren und eine Schaltungsanordnung zum Übertragen von Datensignalen zwischen einer Zentralstation und mindestens einem von in einer Mehrzahl vorgesehenen und über eine Verzweigungsstelle an einer gemeinsamen festgeschalteten Übertragungsstrecke angeschlossenen Datenteilnehmern eines envelopestrukturierten synchronen Datennetzes, wobei von jedem Datenteilnehmer die zu übertragenden Datenbits jeweils mit zwei Steuerbits (Statusbit und Synchronisierbit) zusammengefasst als Envelopes abgegeben werden und wobei die Verzweigungsstelle nach Auswertung wenigstens eines der Steuerbits die Durchschaltung des an der betreffenden Verzweigungsstelle angeschlossenen jeweiligen Datenteilnehmers zu der festgeschalteten Übertragungsstrecke hin vorzunehmen erlaubt.

Im Zusammenhang mit Punkt-zu-Punkt-Verbindungen ist es bereits bekannt (Tagungsband der EUROCON '77 European Conference on Electrotechnics, Conference Proceedings on Communications, 3. bis 7. Mai 1977, Experimental point-topoint connections for synchronous digital data transmission, Seiten 580 bis 586), zur synchronen Übertragung von digitalen Daten zwischen einem Datenteilnehmer und wenigstens einem anderen, an einer Verzweigungsstelle angeschlossenen Datenteilnehmer eine gemeinsame festgeschaltete Übertragungsstrecke eines Datennetzes zu benutzen, in welchem die Daten in Envelopes übertragen werden. Jedes Envelope umfasst neben den vom jeweiligen Datenteilnehmer zu übertragenden Datenbits noch zwei Steuerbits, nämlich ein Statusbit und ein Synchronisier- bzw. Rahmenbit. Die Statusbits der Envelopes bewirken dabei die Steuerung der Durchschaltung der Verbindungen von den Datenteilnehmern zu der festgeschalteten Übertragungsstrecke. In diesem Zusammenhang ist es jedoch nicht näher bekannt, wie die tatsächliche Übertragung der Signale zwischen den einzelnen Datenteilnehmern und der Zentralstation nach Massgabe der Statusbits gesteuert wird.

Aus der US-A-4048441 sind ein Verfahren und eine Schaltungsanordnung bekannt, für die Übertragung von Daten zwischen einzelnen Datenteilnehmern (line stations) und einer Zentralstation (control location). Von jedem Datenteilnehmer werden die zu übertragenden Datenbits jeweils mit einem Statusbit zusammengefasst zu Bytes. Eine Verzweigungsstelle erlaubt nach Auswertung der Statusbits die Durchschaltung der an der Verzweigunsstelle angeschlossenen «line station» zu der festgeschalteten Übertragungsstrecke. Die Verzweigungsstelle speichert die von den «line stations» zugeführten Wörter in eine der jeweiligen «line station» zugehörigen Speicheranordnung. Dabei wird vorausgesetzt, dass die Statusbits aller den Speicheranordnungen zugeführten Bytes im gleichen Byte-Raster liegen und dass ein im Bereich der Verzweigungsstelle erzeugter Byte-Takt ebenfalls in diesem Byte-Raster liegt. Unter diesen Voraussetzungen kann eine mit der Speicheranordnung verbundene Auswerteeinrichtung jene Bitstellen prüfen, an denen sich die Statusbits befinden. Mit dieser Auswerteeinrichtung wird das in der Speicheranordnung jeweils enthaltene Byte derart bewertet, dass lediglich bei Vorhandensein eines bestimmten Statusbits die in der Speicheranordnung enthaltenen Bits an die festgeschaltete Übertragungsstrecke weitergeleitet werden. In vielen Fällen der Praxis liegen die Statusbits der von verschiedenen Datenteilnehmern abgegebenen Bytes nicht im gleichen Byte-Raster. Auch wenn die Statusbits im gleichen Byte-Raster liegen, ist nicht in allen Fällen damit zu rechnen, dass der im Bereich der Verzweigungsstelle erzeugte Byte-Takt in diesem Byte-Raster liegt. Es wäre grundsätzlich denkbar, die nicht eingephasten Bytes mit Hilfe spezieller Synchronisiereinrichtungen derart einzuphasen, dass einerseits alle Bytes im gleichen Byte-Raster liegen und dass andererseits ein im Bereich der Verzweigungsstelle verwendeter Byte-Takt ebenfalls in diesem Byte-Raster liegt. Zu einer derartigen Einphasung der Bytes bzw. des Byte-Taktes ist jedoch ein erheblicher technischer Aufwand erforderlich.

Der Erfindung liegt demgemäss die Aufgabe zugrunde, einen Weg zu zeigen, wie auf besonders einfache Weise die Übertragung von Datensignalen zwischen einer Zentralstation und Datenteilnehmern eines envelopestrukturierten synchronen Datennetzes nach Massgabe von zusammen mit diesen Datensignalen auftretenden Steuerbits gesteuert werden kann.

Gelöst wird die vorstehend aufgezeigte Aufgabe bei einem Verfahren der eingangs genannten Art erfindungsgemäss dadurch, dass an der Verzweigungsstelle die von dem jeweiligen Datenteilnehmer abgegebenen Envelopes in eine dem jeweiligen Datenteilnehmer zugehörige erste Speicheranordnung eingespeichert werden, aus der lediglich die in dem jeweiligen Envelope enthaltenen Datenbits in eine zweite Speicheranordnung umgespeichert werden, dass durch eine mit der ersten Speicheranordnung verbundene Auswerteeinrichtung die Statusbits des in der ersten Speicheranordnung jeweils enthaltenen Envelopes derart bewertet werden, dass lediglich bei Vorhandensein von Statusbits mit festgelegter Polarität («O» oder «I») die in der zweiten Speicheranordnung enthaltenen Datenbits an die festgeschaltete Übertragungsstrecke weitergeleitet werden, und dass bei der Weiterleitung der in der zugehörigen zweiten Speicheranordnung enthaltenen Datenbits durch die jeweilige Auswerteeinrichtung zusätzlich die envelopegerechte Einfügung der Steuerbits (Statusbit und Synchronisierbit) in den Datenbitstrom gesteuert wird.

Die Erfindung bringt den Vorteil mit sich, dass auf besonders einfache Weise die Übertragung von Datensignalen zwischen einer Zentralstation und mindestens einem Datenteilnehmer gesteuert werden kann, weil einerseits die Umschaltungen von einem Datenteilnehmer auf andere Datenteilnehmer und andererseits die Einphasung der Envelopes in ein einheitliches Envelope-Raster in einem Arbeitsgang und mit der gleichen Apparatur vorgenommen werden. Dabei ermöglicht die zweite Speicheranordnung die Eingliederung der Envelopes in das richtige Envelope-Raster. Die Erfindung zeichnet sich ferner dadurch aus, dass sie die zentrale Einfügung der Statusbits und der Synchronisierbits im Bereich der Verzweigungsstelle ermöglicht – unabhängig von den Statusbits bzw. den Synchronisierbits, die der Verzweigungsstelle von den Datenteilnehmern zugeführt werden. Dies bringt den besonderen Vorteil mit sich, dass fehlerhafte Statusbits bzw. Synchronisierbits nicht zur Zentralstation weitergeleitet werden.

Zur Durchführung des Verfahrens gemäss der Erfindung ist es zweckmässig, eine Schaltungsanordnung zu verwenden, bei der in einer Mehrzahl vorgesehene Datenteilnehmer eines Datennetzes über eine Verzweigungsstelle mit einer Zentralstation verbunden sind, zwischen der und jedem Datenteilnehmer Signale in Form von Envelopes übertragbar sind, die jeweils eine vorgegebene Anzahl von Datenbits und Steuerbits aufweisen, wobei die Übertragung der von den Datenteilnehmern abgegebenen Envelopes über die Verzweigungsstelle nach Auswertung der diesen zugehörigen Steuerbits vornehmbar ist. Diese Schaltungsanordnung ist erfindungsgemäss dadurch gekennzeichnet, dass jedem Datenteilnehmer ein erstes Schieberegister zugehörig ist, welches eine Kapazität zur Aufnahme wenigstens eines von dem zugehörigen Datenteilnehmer abgegebenen Envelopes aufweist, dass mit dem ersten Schieberegister ein Zwischenspeicher verbunden ist, der lediglich die Datenbits aus dem ersten Schieberegister parallel zu übernehmen gestattet, dass mit dem Zwischenspeicher ein zweites Schieberegister verbunden ist, welches die in dem Zwischenspeicher jeweils enthaltenen Datenbits parallel zu übernehmen und seriell abzugeben gestattet, dass mit dem ersten Schieberegister eine Statusbit-Auswerteeinrichtung und eine Synchronisiereinrichtung verbunden sind, die ausgangsseitig dem Zwischenspeicher Taktimpulse und der Statusbit-Auswerteeinrichtung Steuersignale zuzuführen gestattet, und dass dem jeweiligen zweiten Schieberegister jeweils nach Übernahme von Datenbits aus dem zugehörigen Zwischenspeicher Schiebeimpulse zur Abgabe der betreffenden Signalbits an die festgeschaltete Übertragungsstrecke zuführbar sind. Hierdurch ergibt sich der Vorteil eines besonders geringen schaltungstechnischen Aufwands für eine Schaltungsanordnung, mit der Datensignale zwischen einer Zentralstation und zumindest einem Datenteilnehmer übertragbar sind.

Zweckmässige Ausgestaltungen der vorstehend bezeichneten Schaltungsanordnung sind in den Ansprüchen 3 bis 7 erfasst.

Im folgenden wird die Erfindung anhand von in den Figuren dargestellten Blockschaltbildern und vorteilhaften Ausführungsbeispielen erläutert:

Fig. 1 zeigt im Blockschaltbild ein Anwendungsbeispiel für die Realisierung des neuen Verfahrens im synchronen Datennetz,

Fig. 2 zeigt im Blockschaltbild das Verzweigungsnetzwerk,

Fig. 3 zeigt ein vorteilhaftes Ausführungsbeispiel des Verzweigungsnetzwerkes für einen Datenteilnehmer,

Fig. 4 zeigt ein vorteilhaftes Ausführungsbeispiel der Statusbit-Auswerteeinrichtung,

Fig. 5 zeigt im Blockschaltbild die Durchschaltung der Datenteilnehmer und die zentrale Einblendung der Synchronisier- und Statusbits und

Fig. 6 zeigt ein vorteilhaftes Ausführungsbeispiel für die Statusbit-Auswertung zur Durchschaltung der Datenkanäle an die Teilnehmer.

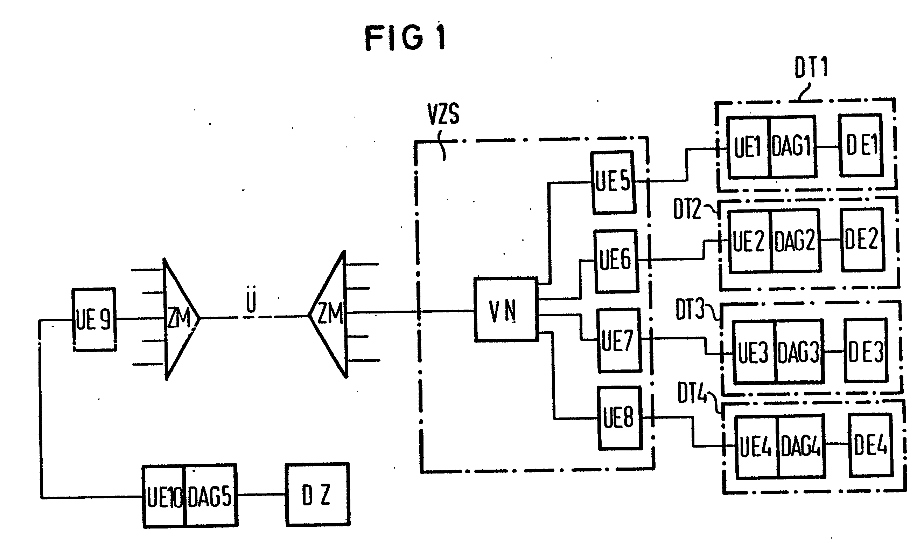

Fig. 1 zeigt ein Beispiel für die Verzweigung einer festgeschalteten Verbindung in einem envelopestrukturierten synchronen Datennetz für den Mehrpunktbetrieb. Die Datenteilnehmer DT1 bis DT4 arbeiten mit der Datenzentrale DZ, beispielsweise einer Datenverarbeitungsanlage, im Mehrpunktbetrieb zusammen. Die Datenzentrale ist über das Datenanschlussgerät DAG5 mit den Übertragungseinrichtungen UE10 und UE9 verbunden. Über ein Zeitmultiplexsystem ZM, das eine Vielzahl von Nachrichtenverbindungen zusammenfasst und die Nachricht gemeinsam über die Übertragungsstrecke Ü überträgt, ist die festgeschaltete Verbindung mit der Verzweigungsstelle VZS verbunden. In der Verzweigungsstelle sind das Verzweigungsnetzwerk VN und die Übertragungseinrichtungen UE5 bis UE8 in Richtung der Datenteilnehmer angeordnet. Jeder Datenteilnehmer DT1 bis DT4 besitzt eine Datenendeinrichtung DE1 bis DE4, ein Datenanschlussgerät DAG1 bis DAG4 und eine Übertragungseinrichtung UE1 bis UE4. Als Datenendeinrichtung wird beispielsweise ein Datendrucker oder ein Bildschirmgerät verwendet. Die Datenanschlussgeräte DAG1 bis DAG5 bilden aus den zu übertragenden Daten oder dem Ruhezustand Envelopes. Es werden im vorliegenden Fall acht Bits, ein Statusbit und ein Synchronisierbit zu einer Envelope zusammengefasst; es wird also jeweils nach acht Bits ein Statusbit und ein Synchronisierbit eingeschoben. In der Empfangsrichtung werden die Statusbits und die Synchronisierbits im Datenanschlussgerät aus dem empfangenen Informationsstrom ausgeblendet und für Synchronisierzwecke bzw. Steuerzwecke verwendet. An die Datenendeinrichtung werden nur die Informationsbits weitergegeben. Die Übertragungseinrichtungen UE1 bis UE10 bestehen jeweils aus einer Sende- und einer Empfangseinrichtung für die beiden Übertragungseinrichtungen. Die Übertragungseinrichtungen haben die Aufgabe, die vom Datenanschlussgerät in Form der Envelopes angebotenen Datenbits in für die Übertragung geeignete Form zu bringen. In der umgekehrten Richtung wird das codierte Empfangssignal in binäre Bits umgewandelt und dem Datenanschlussgerät zugeführt. Die hier verwendeten Datenanschlussgeräte und Übertragungseinrichtungen sind bekannt und werden beim Betrieb von taktsynchronen Datennetzen verwendet.

Die Datenzentrale DZ ruft die einzelnen Datenteilnehmer nacheinander auf. Dies geschieht beispielsweise durch die Aussendung der Adressen der Datenteilnehmer. Jedem Datenteilnehmer ist eine bestimmte Adresse zugeordnet, die beim Datenteilnehmer gespeichert ist. Die von der Datenzentrale ausgesendeten Adressen werden zu allen Teilnehmern übertragen. Es kann jedoch nur der Datenteilnehmer in der Rückrichtung zur Datenzentrale Daten übertragen, dessen gespeicherte Adresse mit der gerade empfangenen Adresse übereinstimmt. Im Ruhezustand senden alle Datenteilnehmer Envelopes aus, deren Statusbit die dem Ruhezustand entsprechende binäre Polarität, nämlich «O», aufweist. Die Statusbits sämtlicher Teilnehmer werden im Verzweigungsnetzwerk überwacht. Hat ein aufgerufener Datenteilnehmer einen Übertragungswunsch, so wird das Statusbit der ausgesendeten Envelopes in den binären Zustand «1» gebracht. Dies ist das Kennzeichen für die Datenübertragung. Die Statusbitüberwachung im Verzweigungsnetzwerk erkennt die geänderte Polarität des Statusbits und schaltet den Datenteilnehmer über die festgeschaltete Verbindung zur Datenzentrale durch. Zwischen der Datenzentrale und dem durchgeschalteten Datenteilnehmer erfolgt dann Datenverkehr. Nach Beendigung des Datenverkehrs sendet der Datenteilnehmer wieder Envelopes aus, deren Statusbits die binäre Polarität «O» aufweisen. Im Verzweigungsnetzwerk wird durch die Statusbitauswerteeinrichtung die Durchschaltung des Datenteilnehmers zur Datenzentrale aufgehoben. Die Datenzentrale sendet danach wieder die Adressen der Teilnehmer nacheinander aus. Es kann dann der nächste Datenteilnehmer zum Zwecke des Datenaustausches mit der Datenzentrale verbunden werden.

Die Fig. 1 zeigt beispielhaft nur vier Datenteilnehmer DT1-DT4, die an das Verzweigungsnetzwerk VN angeschlossen sind. Es können auch mehrere Datenteilnehmer, beispielsweise acht Datenteilnehmer an das Verzweigungsnetzwerk angeschlossen werden. Im Rahmen der Erfindung ist es ohne Schwierigkeiten möglich, zur Erhöhung der Anzahl der angeschlossenen Datenteilnehmer ein Verzweigungsnetzwerk mit einem oder mehreren zusätzlichen Verzweigungsnetzwerken zu verbinden. Dabei ist es möglich, für die Übertagung zwischen den Verzweigungsnetzwerken die an sich bekannten Übertragungseinrichtungen zu verwenden.

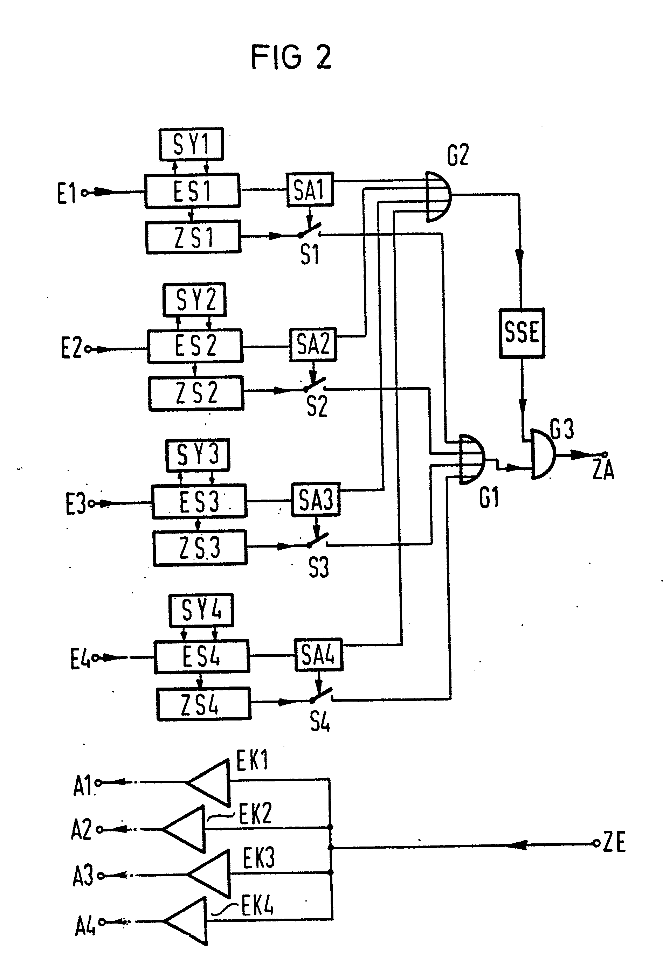

Fig. 2 zeigt im Blockschaltbild das Verzweigungsnetzwerk für vier angeschlossene Datenteilnehmer. Die von den Datenteilnehmern ankommenden Daten gelangen über die Ausgangsleitungen E1 bis E4 der jeweiligen Empfangseinrichtung der Datenübertragungseinrichtung an den jedem Teilnehmer zugeordneten Eingangsspeicher ES1 bis ES4. Jedem Eingangsspeicher ist eine Synchronisiereinrichtung SY1 bis SY4 zugeordnet, damit die ankommende Information envelopegerecht eingespeichert wird. Nachdem eine Envelope in den Speicher ES1 bis ES4 eingespeichert ist, werden die Informationsbits ohne Statusbit und Synchronisierbit in einen Zwischenspeicher ZS1 bis ZS4 übernommen. An jeden Eingangsspeicher ES1 bis ES4 ist eine Statusbit-Auswerteeinrichtung SA1 bis SA4 angeschaltet. Die Statusbit-Auswerteeinrichtung steuert die zugeordneten Schalter S1 bis S4. Im Ruhezustand, wenn also das Statusbit der empfangenen Envelopes die Polarität «O» aufweist, sind die Schalter im geöffneten Zustand. Wenn das Statusbit eines Datenteilnehmers die Polarität «1» aufweist, spricht nur die zugeordnete Auswerteeinrichtung SA1 bis SA4 an und der zugehörige Schalter S1 bis S4 wird geschlossen. Dadurch werden über das ODER-Gatter G1 die im Zwischenspeicher ZS1 bis ZS4 gespeicherten Datenbits an den Ausgang ZA in Richtung Datenzentrale unmittelbar durchgeschaltet. Die angesprochene Statusbit-Auswerteeinrichtung gibt die Polarität «1» des empfangenen Statusbits über die Gatteranordnung G2 an die zentrale Einrichtung SSE ab, die über das Gatter G3 bit- und envelopegerecht das Statusbit und das Synchronisierbit in den Datenstrom einfügt.

Die von der Datenzentrale über die Leitung ZE ankommenden Informationen werden im Verzweigungsnetzwerk unmittelbar über die Entkopplungsstufen EK1 bis EK4 an die Eingänge A1 bis A4 der Sendeschaltungen der Datenübertragungseinrichtungen in Richtung zu den Datenteilnehmern durchgeschaltet.

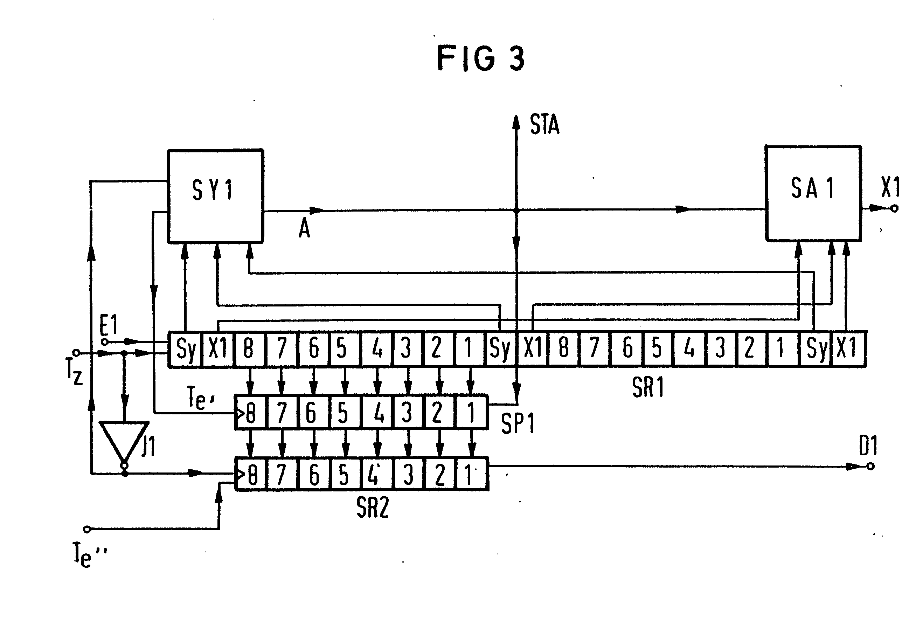

Fig. 3 zeigt ein vorteilhaftes Ausführungsbeispiel der Speicheranordnung und der Auswerteeinrichtung im Verzweigungsnetzwerk für einen Datenteilnehmer. Über die Leitung E1 werden die von der Empfangseinrichtung abgegebenen Informationsbits mit dem Bittakt $T_z$ schrittweise in das Schieberegister SR1 eingeschoben. Das Schieberegister besteht aus 16 Speicherzellen für die Datenbits (1 bis 8) und jeweils drei Speicherzellen für die Statusbits X1 und die Synchronisierbits Sy. Die Synchronisiereinrichtung SY1 überwacht die envelopegerechte Eingabe in den Zwischenspeicher SP1. Grundsätzlich wäre auch ein Schieberegister für die Speicherung einer Envelope ausreichend. Damit jedoch eine erhöhte Sicherheit gegenüber Störungen erreicht wird, werden jeweils mehrere aufeinanderfolgende Synchronisierbits und Statusbits auf ihre Polarität hin überwacht. Im Schieberegister SR1 sind jeweils zwei Envelopes sowie das Synchronisierbit und das Statusbit der nachfolgenden Envelope gespeichert. Die Synchronisiereinrichtung SY1 überwacht alle drei gespeicherten Synchronisierbits Sy. Nachdem die in Fig. 3 eingezeichnete Stellung der Bits im Schieberegister SR1 erreicht ist, wird von der Synchronisiereinrichtung SY1 ein Übernahmeimpuls $T_{e'}$, der dem Envelopetakt entspricht, abgegeben. Mit dem Übernahmeimpuls werden die Informationsbits 1 bis 8 in den Speicher SP1 parallel übernommen. Durch einen weiteren Übernahmeimpuls $T_{e''}$, der ebenfalls dem Envelopetakt entspricht, wird der Inhalt des Speichers SP1 parallel in das Schieberegister SR2 übernommen. Der Inhalt des Schieberegisters SR2 wird mit dem im Inventar T1 invertierten Bittakt $T_z$ bitweise in Serie auf die Datenleitung D1 ausgeschoben.

Im Ruhezustand besitzt das Statusbit X1 die binäre Polarität «O». Die Polarität des Statusbits wird mit der Statusbit-Auswerteeinrichtung SA1 überwacht. Dabei werden ebenfalls, wie bei den Synchronisierbits, jeweils drei aufeinanderfolgende Statusbits auf ihre Polarität überwacht. Nachdem die acht Bits aus dem Schieberegister SR2 ausgeschoben sind, wird der Inhalt des Speichers SP1 parallel mit dem Takt $T_{e''}$ übernommen. Bei einer Störung der Synchronisierung wird über die Leitung A eine Störungsanzeige STA ausgelöst. Gleichzeitig wird die Statusbitausgabe in der Auswerteeinrichtung SA1 zwangsweise in den binären Dauerzustand «O» gebracht und in den Speicher SP1 der binäre Dauerzustand «1» in alle Speicherzellen eingegeben. Wenn das vom Datenteilnehmer ankommende Statusbit X1 die binäre Polarität «1» aufweist, schaltet die Statusbit-Auswerteeinrichtung SA1 die zugehörige Datenleitung D1 an den Ausgang in Richtung Datenzentrale durch.

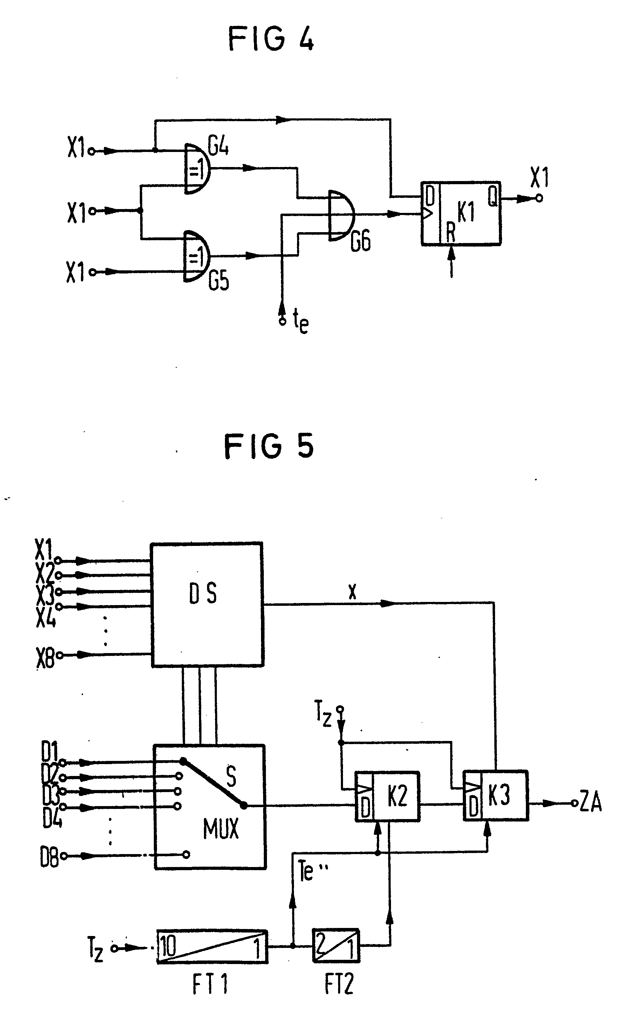

Fig. 4 zeigt eine Statusbit-Auswerteeinrichtung, die mit logischen Schaltstufen aufgebaut ist. Die Statusbits X1 der einzelnen Zellen des in Fig. 3 dargestellten Schieberegisters SR1 gelangen an die beiden Exklusiv-ODER-Gatter G4 und G5. Die Ausgänge der beiden Gatter sind an das ODER-Gatter G6 angeschlossen. Der Ausgang des ODER-Gatters G6 ist mit dem Steuereingang der Kippstufe K1 verbunden. Dem dritten Eingang des ODER-Gatters G6 wird ein Impuls $t_e$ zugeführt, der vom Envelopetakt abgeleitet ist. Am Ausgang des Gatters G6 entsteht nur dann ein kurzer Durchschaltimpuls, wenn alle drei Statusbits die binäre Polarität «O» oder «1» aufweisen. Der Kippstufe K1 wird immer der am Eingang D anliegende Zustand eingegeben, der dann am Ausgang Q der Kippstufe als Statusbit X1 abgegeben wird. Es führt jeweils nur eine Änderung der Polarität des Statusbits an allen drei Eingängen zu einer Änderung bei der Ansteuerung der Kippstufe K1. Kurzzeitige Störungen einzelner Statusbits führen somit nicht zum Umschalten der Kippstufe K1. Über den Eingang R wird die Kippstufe K1 zwangsweise, beispielsweise bei Störungen bei der Synchronisierung in den Ruhezustand zurückgesetzt.

Fig. 5 zeigt im Blockschaltbild die Durchschaltung der Datenkanäle D1 bis D8 und die zentrale Einblendung der Statusbits und Synchronisierbits in den Datenstrom. Die Statusbits X1 bis X8 der einzelnen Datenteilnehmer liegen an der Durchschalteeinrichtung DS an. Abhängig davon, welches Statusbit die binäre Polarität «1» aufweist, wird der zugehörige Datenkanal durchgeschaltet. In Fig. 5 weist beispielsweise das Statusbit X1 die binäre Polarität «1» auf. Die Durchschalteeinrichtung hat somit den Schalter S in der Multiplexeinrichtung MUX so eingestellt, dass der Datenkanal D1 an den Ausgang durchgeschaltet wird. Die binär codierten Datenbits liegen am Vorbereitungseingang D der Kippstufe K2 an. Die Kippstufe K2 blendet die Synchronisierbits und die Kippstufe K3 die Statusbits in den Datenbitstrom ein. Die Kippstufe K2 übernimmt mit dem Bittakt $T_z$ die Datenbits nacheinander und gibt diese an die Kippstufe K3 weiter. Jeweils nach acht Datenbits wird ein Synchronisierbit und ein Statusbit eingeblendet, so dass Envelopes mit zehn Bits am Ausgang ZA entstehen. Über die Leitung x wird die Polarität des Statusbits an einen zusätzlichen Vorbereitunseingang der Kippstufe K3 angelegt. Die Einblendung erfolgt jeweils mit dem Envelopetakt $T_{e''}$, der aus dem Bittakt $T_2$ abgeleitet wird. Mit dem Frequenzteiler FT1, der ein Teilungsverhältnis von 10:1 aufweist, wird der Bittakt geteilt. Am zweiten Steuereingang der beiden Kippstufen K2 und K3 liegt der Envelopetakt $T_{e''}$ an. Mit dem Envelopetakt wird die Polarität des Statusbits in die Kippstufe K3 und in die Kippstufe K2 abwechselnd die binäre Polarität «O» und «1» eingegeben. Für die Synchronisierung werden nämlich die Synchronisierbits abwechselnd mit einer der beiden Polaritäten ausgesendet. Mit dem Frequenzteiler FT2, der ein Teilungsverhältnis von 2:1 aufweist, wird die abwechselnde Einblendung einer der beiden Polaritäten erreicht. Der Ausgang des Frequenzteilers FT2 ist mit einem zusätzlichen Vorbereitungseingang der Kippstufe K2 verbunden. Anstelle der beiden Kippstufen K2 und K3 kann auch ein zweistufiges Schieberegister mit einem zusätzlichen Ladeeingang für jede Speicherzelle angeordnet werden.

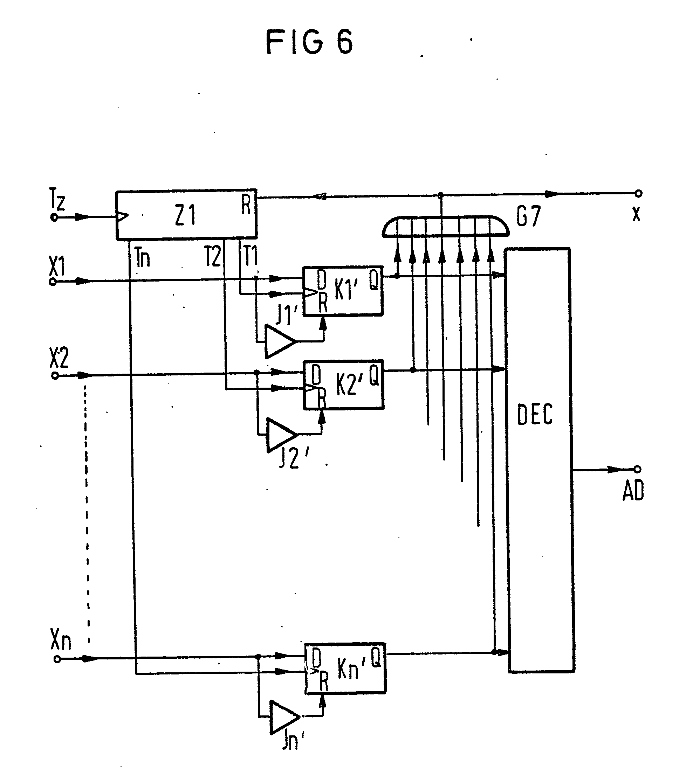

Die Fig. 6 zeigt ein besonderes vorteilhaftes Ausführungsbeispiel für die Statusbit-Auswertung zur Durchschaltung der Datenkanäle. Über die Leitungen X1 bis Xn wird im Verzweigungsnetzwerk die Polarität der von den Datenteilnehmern stammenden Statusbits an den Vorbereitungseingang D der jedem Datenteilnehmer zugeordneten Kippstufe K1' bis Kn' angelegt. Ein Zähler Z1, der soviele Zählstellungen aufweist, wie angeschlossene Datenteilnehmer vorhanden sind, zählt mit dem Bittakt $T_z$ durch. Beim Erreichen des Zählerendstandes beginnt der Zähler wieder von vorne zu zählen. Jeder Zählausgang des Zählers ist mit dem Takteingang der zugeordneten Kippstufe K1' bis Kn' verbunden. Der Zähler fragt nacheinander die Leitungen X1 bis Xn ab. Bei jeder Zählstellung wird ein Impuls T1 bis Tn am entsprechenden Ausgang des Zählers abgegeben, der die auf der zugehörigen Leitung X1 bis Xn herrschende Polarität in die jeweilige Kippstufe eingibt. Am Ausgang Q der Kippstufen wird die in der Kippstufe gespeicherte Polarität abgegeben. Die Ausgänge der Kippstufen werden über das ODER-Gatter G7 zusammengefasst und über die Leitung x der binäre Zustand für das in den Datenbitstrom einzublendende Statusbit der gemeinsamen Einrichtung für die Einblendung mitgeteilt.

Im Ruhezustand der Datenteilnehmer erscheint auf den Leitungen X1 bis Xn die binäre Polarität «O», die die Kippstufen K1' bis Kn' am Ausgang Q abgeben. Über die Leitung x wird ebenfalls die binäre Polarität «O» abgegeben. Tritt auf einer der Leitungen X1 bis Xn der binäre Zustand «1» auf, so wird dieser Zustand beim Zusammentreffen mit der Zählstellung des Zählers in die zugeordnete Kippstufe eingegeben. Am Ausgang Q dieser Kippstufe entsteht ebenfalls der binäre Zustand «1», der über das Gatter G7 auf die Leitung x weitergegeben wird. Über den Eingang R des Zählers Z1 wird mit der binären Polarität «1» der Zähler Z1 gestoppt. Es unterbleibt dann das weitere Abfragen der Leitungen X1 bis Xn. Die Ausgänge der Kippstufen sind mit einem Decoder DEC verbunden, der Adressen bildet. Jeder ankommenden Leitung X1 bis Xn ist eine binär codierte Adresse für den zugehörigen Datenkanal zugeordnet. Diese Adresse wird über die Leitung AD an die Multiplexdurchschalteinrichtung für die Datenkanäle abgegeben, über die der adressierte Datenkanal durchgeschaltet wird. Wenn in der Zwischenzeit aufgrund von Störungen zusätzlich auf einer der Leitungen X1 bis Xn für das Statusbit die binäre Polarität «1» auftritt, so führt dies zu keiner Beeinflussung der Statusbitauswertung. Bei Beendigung des Datenverkehrs zwischen dem durchgeschalteten Teilnehmer und der Datenzentrale erscheint auf der entsprechenden Eingangsleitung wieder die binäre Polarität «O», die über den angeschalteten Inverter I1' bis In' die Kippstufe über den Rücksetzeingang R in die Ausgangsstellung zurücksteuert. Dadurch entsteht am Ausgang Q dieser Kippstufe wieder die binäre Polarität «O», so dass am Eingang R des Zählers Z1 das Stoppsignal aufgehoben wird und der Zähler weiterzählt.

Die verwendeten Baustufen, wie Zähler, Decoder zur Bildung einer Adresse 1 aus n sowie die Multiplexdurchschalteinrichtung sind an sich bekannt und im Handel in integrierter Schaltkreis--technik erhältlich.

## Patentansprüche

1. Verfahren zum Übertragen von Datensignalen zwischen einer Zentralstation und mindestens einem von in einer Mehrzahl vorgesehenen und über eine Verzweigungsstelle an einer gemeinsamen festgeschalteten Übertragungsstrecke angeschlossenen Datenteilnehmern eines envelopestrukturierten synchronen Datennetzes, wobei von jedem Datenteilnehmer die zu übertragenden Datenbits jeweils mit zwei Steuerbits (Statusbit und Synchronisierbit) zusammengefasst als Envelopes abgegeben werden und wobei die Verzweigungsstelle nach Auswertung wenigstens eines der Steuerbits die Durchschaltung des an der betreffenden Verzweigungsstelle angeschlossenen jeweiligen Datenteilnehmers zu der festgeschalteten Übertragungsstrecke hin vorzunehmen erlaubt, dadurch gekennzeichnet, dass an der Verzweigungsstelle (VZS) die von dem jeweiligen Datenteilnehmer (DT1 bis DT4) abgegebenen Envelopes in eine dem jeweiligen Datenteilnehmer zugehörige erste Speicheranordnung (z.B. ES1) eingespeichert werden, aus der lediglich die in dem jeweiligen Envelope enthaltenen Datenbits in eine zweite Speicheranordnung (ZS1) umgespeichert werden, dass durch eine mit der ersten Speicheranordnung (ES1) verbundene Auswerteeinrichtung (SA1) die Statusbits des in der ersten Speicheranordnung (ES1) jeweils enthaltenen Envelopes derart bewertet werden, dass lediglich bei Vorhandensein von Statusbits mit festgelegter Polarität («O» oder «I») die in der zweiten Speicheranordnung (ZS1) enthaltenen Datenbits an die festgeschaltete Übertragungsstrecke weitergeleitet werden, und dass bei der Weiterleitung der in der zugehörigen zweiten Speicheranordnung (ZS1) enthaltenen Datenbits durch die jeweilige Auswerteeinrichtung (z.B SA1) zusätzlich die envelopegerechte Einfügung der Steuerbits (Statusbit und Synchronisierbit) in den Datenbitstrom gesteuert wird. (Fig. 1 und 2)

2. Schaltungsanordnung zur Durchführung des Verfahrens nach Anspruch 1, wobei in der Mehrzahl vorgesehene Datenteilnehmer eines Datennetzes über eine Verzweigungsstelle mit einer Zentralstation verbunden sind, zwischen der und jedem Datenteilnehmer Signale in Form von Envelopes übertragbar sind, die jeweils eine vorgegebene Anzahl von Datenbits und Steuerbits aufweisen, wobei die Übertragung der von den Datenteilnehmern abgegebenen Envelopes über die Verzweigungsstelle nach Auswertung der diesen zugehörigen Steuerbits vornehmbar ist, dadurch gekennzeichnet, dass jedem Datenteilnehmer (DT1 bis DT4) ein erstes Schieberegister (SR1) zugehörig ist, welches eine Kapazität zur Aufnahme wenigstens eines von dem zugehörigen Datenteilnehmer abgegebenen Envelopes aufweist, dass mit dem ersten Schieberegister (SR1) ein Zwischenspeicher (SP1) verbunden ist, der lediglich die Datenbits aus dem ersten Schieberegister (SR1) parallel zu übernehmen gestattet, dass mit dem Zwischenspeicher (SP1) ein zweites Schieberegister (SR2) verbunden ist, welches die in dem Zwischenspeicher (SP1) jeweils enthaltenen Datenbits parallel zu übernehmen und seriell abzugeben gestattet, dass mit dem ersten Schieberegister (SR1) eine Statusbit-Auswerteeinrichtung (SA1) und eine Synchronisierungseinrichtung (SY1) verbunden sind, die ausgangsseitig dem Zwischenspeicher (SP1) Taktimpulse und der Statusbit-Auswerteeinrichtung (SA1) Steuersignale zuzuführen gestattet, und dass dem jeweiligen zweiten Schieberegister (SR2) jeweils nach Übernahme von Datenbits aus dem zugehörigen Zwischenspeicher (SP1) Schiebeimpulse (Te) zur Abgabe der betreffenden Signalbits an die festgeschaltete Übertragungsstrecke zuführbar sind. (Fig. 3)

3. Schaltungsanordnung nach Anspruch 2, dadurch gekennzeichnet, dass die Ausgänge sämtlicher den Datenteilnehmern individuell zugehöriger zweiter Schieberegister (SR2) an einer Multiplex-Durchschalteeinrichtung (MUX) angeschlossen sind, dass am Ausgang der Multiplex-Durchschalteeinrichtung (MUX) zwei hintereinander geschaltete und vom Bittakt (Tz) des Datennetzes gesteuerte Kippstufen (K2, K3) angeschlossen sind, dass an einem zusätzlichen Vorbereitungseingang der einen Kippstufe (K3) die Polarität des dem jeweiligen Datenbitstrom zugehörigen Statusbit für die Envelopebildung und an einem zusätzlichen Vorbereitungseingang der anderen Kippstufe (K2) die Polarität des zugehörigen Synchronisierbits anliegt und dass einem zusätzlichen Steuereingang der Kippstufen (K2, K3) ein aus dem Bittakt (Tz) abgeleiteter Envelopetakt (Te″) zugeführt ist. (Fig. 5)

4. Schaltungsanordung nach Anspruch 2 oder 3, dadurch gekennzeichnet, dass das dem jeweiligen Datenteilnehmer (z.B. DT1) zugehörige erste Schieberegister (SR1) eine Aufnahmekapazität für die Aufnahme zumindest zweier Envelopes aufweist und dass die zugehörige Synchronisiereinrichtung (SY1) sowie die zugehörige Statusbit-Auswerteeinrichtung (SA1) eingangsseitig an jenen Bitstellen (Sy bzw. X1) des ersten Schieberegisters (SR1) angeschlossen sind, die bei ordnungsgemässem Betrieb Synchronisierbits bzw. Statusbits aufzuweisen haben.

5. Schaltungsanordnung nach einem der Ansprüche 2 bis 4, dadurch gekennzeichnet, dass bei nicht envelopegerechter Einspeicherung der von einem Datenteilnehmer (z.B. DT1) abgegebenen Envelopes das von der zugehörigen Synchronisiereinrichtung (SY1) an die Statusbit-Auswerteeinrichtung (SA1) abgegebene Steuersignal diese Statusbit-Auswerteeinrichtung (SA1) zwangsweise in den Ruhestand steuert und die Eingabe eines Dauerzustandssignals («1») in den zugehörigen Zwischenspeicher (SP1) bewirkt.

6. Schaltungsanordnung nach Anspruch 5, dadurch gekennzeichnet, dass die Statusbit-Auswerteeinrichtung (SA1) aus Verknüpfungsgliedern (G4, G5, G6 K1) derart aufgebaut ist, dass sie ein dem Zustand eines bewerteten Statusbits entsprechendes Bit nur dann abgibt, wenn in mehreren aufeinanderfolgenden Envelopes Statusbits mit gleicher Polarität auftreten. (Fig. 4)

7. Schaltungsanordnung nach einem der Ansprüche 2 bis 6, dadurch gekennzeichnet, dass für die Abgabe von den Statusbits in den von den einzelnen Datenteilnehmern (DT1 bis DTn) abgegebenen Envelopes entsprechenden Bits ein vom Bittakt (Tz) des Datennetzes gesteuerter Zähler (Z1) vorgesehen ist, der so viele Zählerstellungen aufweist wie Datenteilnehmer (DT1 bis DTn) vorgesehen sind, dass der Zähler (Z1) Ausgangsleitungen (X1 bis Xn) der den Datenteilnehmern zugehörigen Statusbit-Auswerteeinrichtungen (SA1 bis SAn) nacheinander abfragt und den binären Zustand des jeweiligen Statusbits in eine der jeweiligen Statusbit-Auswerteeinrichtung nachgeschaltete Kippstufe (K1′ bis Kn′) eingibt, dass die Ausgänge sämtlicher Kippstufen (K1′ bis Kn′) mit einem Decoder (Dec) verbunden sind, der dann eine Adresse bildet, wenn am Ausgang einer der Kippstufen (K1′ bis Kn′) ein bestimmter binärer Zustand («1») für eine Datenübertragung auftritt, dass der Ausgang (AD) des Decoders (Dec) an einem Steuereingang für die Multiplex-Durchschalteeinrichtung (MUX) angeschlossen ist und den durch die jeweilige bereitgestellte Adresse bestimmten Datenkanal für die Durchschaltung festlegt, und dass beim Auftreten des genannten bestimmten Binärzustandes («1») am Ausgang einer Kippstufe (z.B. K1′) der Zähler (Z1) stillgesetzt wird und erst beim Zurücksteuern dieser Kippstufe (K′) in den Ausgangszustand freigebbar ist.

## Claims

1. Process for the transmission of data signals between a central station and at least one of a plurality of data subscribers which are connected via a junction station to a common permanently connected transmission link within an envelope structured synchronous data network, wherein each data subscriber emits the data bits which are to be transmitted combined with two control bits (status bit and synchronising bit) as envelopes and wherein, following the analysis of at least one of the control bits, the junction station allows the data subscriber which is connected to the junction station in question to be switched through to the permanently connected transmission link, characterized in that in the junction station (VZA) the envelopes emitted from the data subscriber in question (DT1 to DT4) are input into a first storage arrangement (e.g. ES1) which is assigned to the data subscriber in question and from which only the data bits contained in the relevant envelope are transferred to a second storage arrangement (ZS1), that an analysis device (SA1) which is connected to the first storage arrangement (ES1) evaluates the status bits of the envelope contained in the first storage arrangement (ES1) in such manner that only in the presence of status bits which possess a predetermined polarity («0» or «1») are the data bits contained in the second storage arrangement (ZS1) forwarded to the permanently connected transmission link, and that when the data bits contained in the associated second storage arrangement (ZS1) are forwarded, the analysis device in question (e.g. SA1) additionally controls the envelope-correct insertion of the control bits (status bit and synchronising bit) into the data bit flow (Fig. 1 and 2).

2. Circuit arrangement for implementation of the process claimed in claim 1, wherein data subscribers, provided in a plurality within a data network, are connected via a junction station to a central station between which and each data subscriber, signals may be transmitted in the form of envelopes each of which comprise a predetermined number of data bits and control bits, wherein the transmission of envelopes emitted from the data subscribers can take place via the junction station following the analysis of the control bits assigned to the latter, characterized in that each data subscriber (DT1 to DT4) is assigned a first shift register (SR1) which has the capacity to accommodate at least one envelope emitted from the associated data subscriber, that the first shift register (SR1) is connected to an intermediate store (SP1) which permits a parallel transfer only of the data bits from the first shift register (SR1) that the intermediate store (SP1) is connected to a second shift register (SR2) which permits the parallel transfer and serial output of the data bits contained in the intermediate store (SP1), that the first shift register (SR1) is connected to a status bit analysis device (SA1) and to a synchronising device (SY1) which, at their output, enable the intermediate store (SP1) to be supplied with clock pulses and the status bit analysis device (SA1) to be supplied with control signals, and that following the transfer of data bits from the associated intermediate store (SP1) the second shift register (SR2) can be supplied with shift pulses (Te) for the emission of the relevant signal bits to the permanently connected transmission link (Fig. 3).

3. Circuit arrangement as claimed in claim 2, characterized in that the outputs of all the second shift registers (SR2) which are individually assigned to the data subscribers are connected to a multiplex switching device (MUX), that the output of the multiplex switching device (MUX) is connected to two series connected flip-flops (K2, K3) which are controlled by the bit pulse train (Tz) of the data network, that en additional priming input of the first flip-flop (K3) is connected with the polarity of the status bit assigned to the relevant data bit flow for the envelope formation, and an additional priming input of the other flip-flop (K2) is connected to the polarity of the associated synchronising bit and that an additional control input of the flip-flops (K2, K3) is supplied with an envelope clock pulse (Te'') derived from the bit pulse train (Tz Fig. 5).

4. Circuit arrangement as claimed in claim 2 or 3, characterized in that the first shift register (SR1) assigned to the relevant data subscriber (e. g. DT1) has the capacity to accommodate at least two envelopes, and that the associated synchronising device (SY1) and the associated status bit analysis device (SA1) are connected at their inputs to those bit positions (Sy and X1) of the first shift register (SR1) which during regular operation must contain synchronising bits and status bits respectively.

5. Circuit arrangement as claimed in one of the claims 2 to 4, characterized in that in the event of envelopeincorrect input of the envelope emitted from a data subscriber (e.g. DT1), the control signal output from the associated synchronising device (SY1) to the status bit analysis device (SA1) automatically brings this status bit analysis device (SA1) into the rest state and causes a continuous state signal («1») to be input into the associated intermediate store (SP1).

6. Circuit arrangement as claimed in claim 5, characterized in that the status bit analysis device (SA1) is constructed from logic linking elements (G4, G5, G6, K1) in such manner that it emits a bit corresponding to the state of an evaluated status bit only when status bits of identical polarity occur in a plurality of consecutive envelopes (Fig. 4).

7. Circuit arrangement as claimed in one of the claims 2 to 6, characterized in that for the emission of bits corresponding to the status bit in the envelopes supplied by the individual data subscribers (DT1 to DTn), a counter (Z1) is provided which is controlled by the bit pulse train (Tz) of the data network and which possesses the same number of counter positions as data subscribers (DT1 to DTn) are provided, that the counter (Z1) consecutively interrogates output lines (X1 to Xn) of the status bit analysis devices (SA1 to SAn) assigned to the data subscribers and inputs and binary state of the status bit in question into a flip-flop (K1' to Kn') following the relevant status bit analysis device, that the outputs of all the flip-flops (K1' to Kn') are connected to a decoder (Dec) which forms an address whenever a specific binary state («1») occurs in respect of a data transmission at the output of one of the flip-flops (K1' to Kn'), that the output (AD) of the decoder (Dec) is connected to a control input for the multiplex switching device (MUX) and determines the data channel, specified by the address which has been presented, for the switching operation and that on the occurrence of the aforementioned specific binary state («1») at the output of a flip-flop (e.g. K1') the counter (Z1) is brought to a halt and cannot be enabled until this flip-flop (K1') is returned to the starting state.

## Revendications

1. Méthode pour la transmission de signaux de données entre une station centrale et au moins un parmi des postes d'abonnés, prévus en grand nombre et raccordés à une voie de transmission commune toujours en circuit, par l'intermédiaire d'un point de branchement, d'un réseau de données synchrone à structure d'enveloppe, les bits de données à transmettre étant délivrés sous forme d'enveloppes en étant respectivement réunis avec des bits de commande (bit d'état et bit de synchronisation) à partir de chaque poste d'abonné, et le point de branchement permettant, après évaluation d'au moins un des bits de commande, d'effectuer la mise en communication du poste d'abonné respectif raccordé au point de branchement concerné avec la voie de transmission toujours en circuit, caractérisée en ce qu'au point de branchement (VZS) les enveloppes délivrées par le poste d'abonné respectif (DT1 à DT4) sont mémorisées dans un premier dispositif de mémoire (par exemple ES1) associé au poste d'abonné respectif, à partir duquel uniquement les bits de données contenus dans l'enveloppe respective sont transférés dans un second dispositif de mémoire (ZS1), que les bits d'état de l'enveloppe respectivement contenue dans le premier dispositif de mémoire (ES1) sont évalués, au moyen d'un dispositif d'évaluation (SA1) couplé au premier dispositif de mémoire (ES1), de sorte que c'est uniquement en présence de bits d'état de polarité déteminée («0» ou «1») que les bits de données contenus dans le second dispositif de mémoire (ZS1) sont transmis à la voie de transmission toujours en circuit, et que lors de la transmission des bits de données contenus dans le second dispositif de mémoire associé (ZS1) l'introduction conforme à l'enveloppe des bits de commande (bit d'état et bit de synchronisation) est en outre commandée dans le courant de bits de données, par le dispositif d'évaluation respectif (par exemple SA1) (figures 1 et 2).

2. Circuit pour la mise en œuvre du procédé suivant la revendication 1, des postes d'abonnés, prévus en grand nombre, d'un réseau de données étant couplés, par l'intermédiaire d'un point de branchement, avec une station centrale entre laquelle et chaque poste d'abonné peuvent être transmis des signaux sous la forme d'enveloppes qui comportent respectivement un nombre prédéterminé de bits de données et de bits de commande, la transmission des enveloppes délivrées par les postes d'abonnés pouvant être effectuée, par l'intermédiaire du point de branchement, après évaluation des bits de commande qui sont associés, caractérisée en ce qu'à chaque poste d'abonné (DT1 à DT4) est associé un premier registre à décalage (SR1) qui possède une capacité pour recevoir au moins une enveloppe délivrée par le poste d'abonné associé, qu'au premier registre à décalage (SR1) est couplée une mémoire intermédiaire (SP1) qui permet simplement de recevoir en parallèle les bits de données provenant du premier registre à décalage (SR1), qu'à la mémoire intermédiaire (SP1) est couplé un second registre à décalage (SR2) qui permet de recevoir en parallèle et de délivrer en série les bits de données respectifs contenus dans la mémoire intermédiaire (SP1), qu'au premier registre à décalage (SR1) sont couplés un dispositif (SA1) d'évaluation des bits d'état et un dispositif de synchronisation (SY1) qui, côté sortie, permet d'appliquer des impulsions de cadence à la mémoire intermédiaire (SP1) et des signaux de commande au dispositif (SA1) d'évaluation des bits d'état, et que des impulsions de décalage (Te) peuvent être appliquées au second registre à décalage respectif (SR2), respectivement après réception de bits de données en provenance de la mémoire intermédiaire associée (SP1), pour délivrer les bits de signaux concernés à la voie de transmission toujours en circuit (figure 3).

3. Circuit suivant la revendication 2, caractérisée en ce que les sorties de tous les seconds registres à décalage (SR2) associées individuellement aux postes d'abonnés sont reliées à un dispositif de mise en communication multiplex (MUX), qu'à la sortie du dispositif de mise en communication multiplex (MUX) sont reliées deux bascules (K2, K3) montées l'une derrière l'autre et commandées par la cadence de bits (Tz) du réseau de données, que sur une entrée de préparation supplémentaire de l'une des bascules (K3) est appliquée la polarité du bit d'état associé au courant de bit respectif pour la formation de l'enveloppe et que sur une entrée de préparation supplémentaire de l'autre bascule (K2) est appliqué le bit de synchronisation associé, et que sur une entrée de commande supplémentaire des bascules (K2, K3) est appliquée une cadence d'enveloppes (Te'') dérivée de la cadence de bits (Tz) (figure 5).

4. Circuit suivant l'une des revendications 2 ou 3, caractérisée en ce que le premier registre (SR1) associé au poste d'abonné respectif (par exemple DT1), possède une capacité pour la réception d'au moins deux enveloppes, et que le dispositif de synchronisation associé (SY1) ainsi que le dispositif associé (SA1) d'evaluation des bits d'états sont raccordés, côté entrée, aux positions binaires (Sy ou respectivement XI) du premier registre à décalage (SR1) qui doivent comporter des bits de synchronisation respectivement des bits d'état lors d'un fonctionnement normal.

5. Circuit suivant l'une des revendications 2 à 4, caractérisée en ce que lors d'une mémorisation non conforme à l'enveloppe des enveloppes délivrées par un poste d'abonné (par exemple DT1), le signal de commande délivré au dispositif (SA1) d'évaluation des bits d'état par le dispositif de synchronisation associé (SY1) met obligatoirement ce dispositif (SA1) d'évaluation de bits d'état dans l'état de repos et provoque l'introduction d'un signal d'état permanent («1») dans la mémoire intermédiaire associée (SP1).

6. Circuit suivant la revendication 5, caractérisée en ce que le dispositif (SA1) d'évaluation d'état est constitué par les éléments logiques (G4, G5, G6, K1) de manière à délivrer un bit correspondant à l'état d'un bit d'état évalué uniquement lorsque les bits d'état possédant la même polarité apparaissent dans plusieurs enveloppes successives (figure 4).

7. Circuit suivant l'une des revendications 2 à 6, caractérisée en ce que pour la délivrance de bits d'état dans les bits correspondant à des enveloppes délivrées par les postes d'abonnés individuels (DT1 à DTn), est prévu un compteur (Z1) commandé par la cadence de bits (Tz) du réseau de données et qui comporte autant de positions de contact que sont prévus de postes d'abonnés (DT1 à DTn), que le compteur (Z1) interroge successivement des lignes de sortie (X1 à Xn) des dispositifs (SA1 à SAn) d'évaluation de bits d'état associés aux postes d'abonnés et introduit l'état binaire du bit d'état respectif dans une bascule (K1' à Kn') montée en aval du dispositif d'évaluation d'état respectif, que les sorties de toutes les bascules (K1' à Kn') sont reliées à un décodeur (Dec) qui forme alors l'adresse lorsqu'il apparaît sur la sortie d'une des bascules (K1' à Kn') un état binaire déterminé («1») pour une transmission de données, que la sortie (AD) du décodeur (Dec) est reliée à une entrée de commande pour le dispositif de mise en communication multiplex (MUX) et détermine le canal de données déterminé par l'adresse préparée respective pour la mise en communication, et que lors de l'apparition dudit état binaire déterminé («1») sur la sortie d'une bascule (par exemple K1') le compteur est arrêté et ne peut être remis en l'état initial que lors de la remise à l'état de repos de cette bascule (K1').

# FIG 1

0005489

# FIG 2

# FIG 3

0005489

# FIG 4

# FIG 5

0005489

# FIG 6

19